# EUROPEAN PATENT APPLICATION

(11) **EP 1 139 233 A1**
(43) Date of publication of application: **04.10.2001**
(21) Application number: 00302770.3
(22) Date of filing: 31.03.2000
(51) Int. Cl.: G06F 17/30, G06F 17/60

(54) **Method, computer and computer program for the supply of information, services or products**

(71) Applicant: BRITISH TELECOMMUNICATIONS public limited company, London EC1A 7AJ (GB)
(72) Inventor: The designation of the inventor has not yet been filed
(74) Representative: Musker, David Charles

(57) **Abstract**

A method of operating a computer system to provide information, products or services comprising: downloading a program from a server computer to a terminal computer; executing the program on the terminal computer, the program being arranged to read data from the terminal computer and transmit results to the host computer; and utilising the results in selecting the parameters of the information, product or service to supply.

## Description

This invention relates to systems for supply of information, services or products.

In recent years, calls centres have become widespread in Europe. As used herein, a call centre is an organisation (typically on a single premises) employing a number of people to answer telephones. Calls centres were originally used by telecommunications companies themselves, to answer directory enquires, for the payment of bills, or the reporting of faults. However, more recently, call centres are used by many different types of products or service supplier, for purposes as diverse as telesales, answering queries, accepting orders for products, and complaints.

Such call centres are nowadays typically supplied with automatic answering units which answer a call from a user, and then provide a synthesised voice reciting a series of options on a "voice menu", to which the user responds either by pressing a key or (where the answering unit includes speech recognition) by reciting a choice.

After the user has navigated sufficient menus, either recording information is supplied by the response unit or he is connected to the correct human telephone operator in the call centre.

Such call centres are typically provided by third party companies, who in turn are supplied with information or a script by the product or service provider. It is estimated that call centres will employ 5% of working Europeans in the year 2000. However, despite their widespread use, existing call centres are sometimes found unsatisfactory for the following reasons.
- Customers sometimes report dissatisfaction, a feeling that they "do not matter".
- Some employees find call centre work hard and stressful.
- Call centres are expensive to set up (they require the hiring of a larger number of people) and are sensitive to the loss of staff.
- Some customers find that they have too many voice menus to navigate and are unable to undue choices, causing frustration.

The present invention is intended to address one or more of these difficulties, and to provide a substitute for a conventional call centre, particularly (but not exclusively) by the use of Internet technology.

Aspects of the invention are defined in the claims.

The use of the Internet allows the user to be presented with a larger volume of information, and to receive information in visual (and other) formats, which is not possible with existing call centres. This may shorten the number of menus necessary for an answering unit, and reduce the amount of conversation relative to that which would be necessary with a human operator.

The experience of the user is enhanced by the fact that he is able to navigate options according to his own choices and in his own time, rather than being forced to respond to voice menus.

Preferably, the system includes means for connecting the user to a human operator, using Voice Over Internet technology.

Preferably, the system includes means for providing a communications link between the user and another user. This allows users to share their past experience, at the point of making a purpose of a product or service.

Preferably, the invention makes use of mobile agent technology; in other words, technology in which programs are able to more between computers and continue functioning thereafter. This has several benefits.

Firstly, if employed as between the call centre and the user, it enables the call centre to dispatch a search program to the user's computer, to extract necessary information, and to return, thus enabling the user to reduce re-typing information, whilst maintaining the user's confidentiality by keeping the data on his local computer insofar as possible.

When used in the link between the call centre and the product or service suppliers, mobile agent technology allows an agent program from the service provider to move to the call centre computer, avoiding the need to replicate the service provider computer database at the call centre or to provide the call centre with access rights to the service provider databases.

At this point, it should be mentioned that it is known to provide Internet sites for accessing information from one product or service provider (in which case they typically own the site) and to provide sites which act as agencies. These act as a single database (for example, the Apollo travel database or the Thomas Cook database) for information held on a number of different service providers.

It may also be mentioned that WO 99/44338 describes a website in which, as well as than navigating website menus, a user is presented with an alternative in the form of a "call me" button, in response to the execution of which they are asked to enter their telephone number, and receive a later call from a call centre representative.

Embodiments of the invention will now be described, with reference to the accompanying drawings, in which:
Figure 1 is a block diagram showing the apparatus employed in an embodiment of the invention; and
Figure 2 is a block diagram showing the apparatus present in a user terminal of Figure 1;
Figure 3 is an illustrative diagram showing the programs provided for controlling the computers forming part of the process of Figure 1;
Figure 4 is a screen display produced during operation of the apparatus of Figure 2;
Figure 5 is a diagram showing stages of communication during operation of the embodiment of Figure 1;
Figure 6 is a flow diagram showing the overall operation of a control program forming part of the programs of Figure 3;
Figure 7 is a flow diagram showing the generic operation of the agent programs forming part of Figure 3;
Figure 8 is a flow diagram showing the process of setting up a chat session in the process of Figure 6;
Figure 9 is a flow diagram showing the process of setting up a voice call session in the process of Figure 6;
Figure 10 shows the specific processes performed by an adviser agent program forming part of the generic flow diagram of Figure 7; and
Figure 11 correspondingly shows the specific processes performed by a supplier agent program.

### FIRST EMBODIMENT

The first embodiment of the invention will now be illustrated. In this embodiment, the invention is used to emulate a call centre operating as a travel agent which provides travel information, arranges trips for users, and books hotels and tickets.

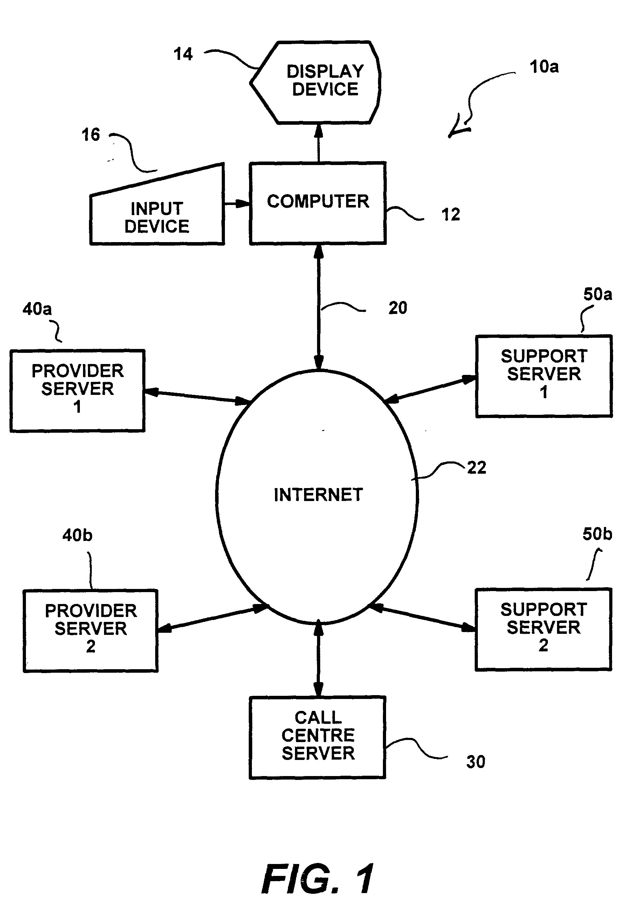

Referring to Figure 1, a user interacts with a user terminal 10 comprising a computer 12 having a display 14 and input device (e.g. keyboard) 16. At any given moment there may be many such users at terminals 10a, 10b (not shown) etc. in communication with the call centre server 30. The computer communicates via a telephone line 20 with the network of computers known as the Internet 22, to a server computer 30. The call centre 30 communicates via the Internet via servers 40a, 40b each associated with a respective service provider such as an airline computer 40a, a hotel chain computer 40b, and so on.

The call centre server is also connected to a number of computers 50a, 50b associated with different support services the call centre server will make use of; for example, a first computer 50a associated with a credit card company and a second 50b associated with a bank.

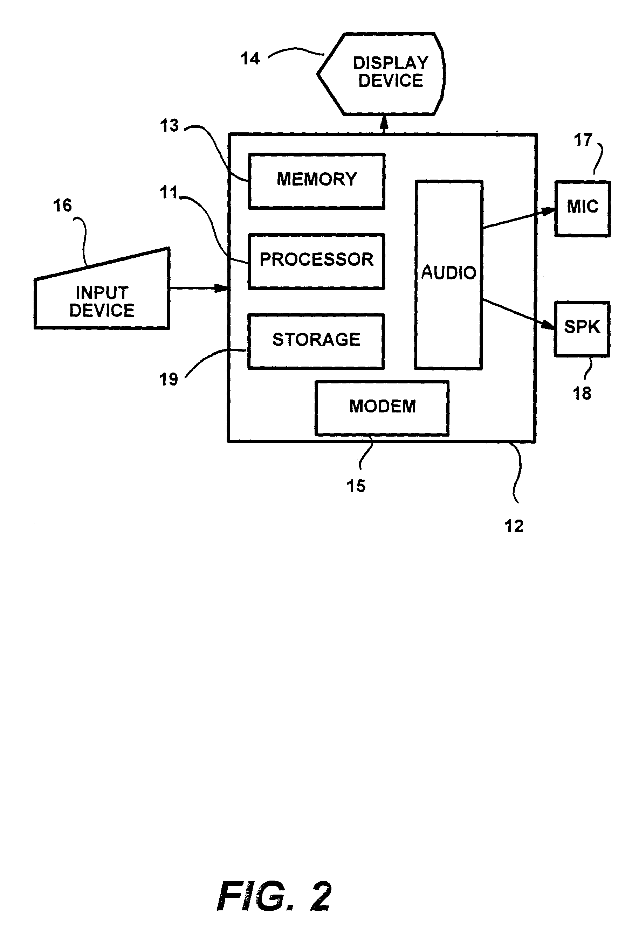

Referring to Figure 2, as is conventional, the user terminal 10 comprises a microprocessor 11 such as an Intel Pentium 3 microprocessor, coupled to memory 13, storage 19 (e.g. a disk drive), and a modem 15 in communication with a telephone line 20.

Also provided are a loudspeaker 17 and microphone 18, with a suitable audio interface device (not shown).

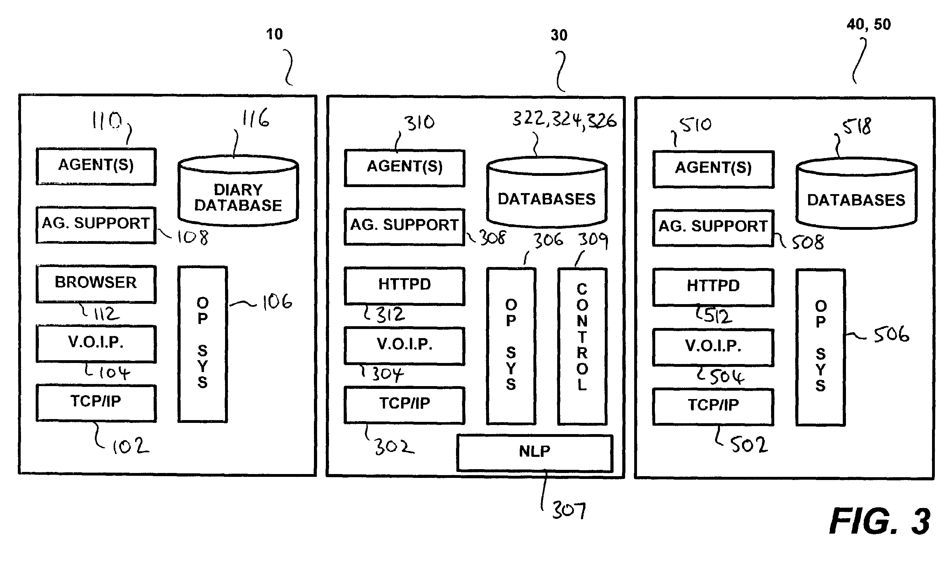

Referring to Figure 3, the programs present in the embodiment of Figure 1 will now briefly be discussed. Each of the computers 10, 30, 40, 50 includes a TCP/IP stack 102, 302, 402, 502 respectively, and an operating system 106, 306, 406, 506 (typically Microsoft Windows ™ or Linux ™ on the user terminal 10, and Unix on the server computers 30, 40, 50).

Each of the computers includes an agent support platform program 108, 308, 408, 508 which provides processes for receiving agent programs via the Internet and starting their execution; and for interconnecting the agent programs in communication with each other and other programs.

It may, for example, be as described in the paper "DBMAS: A multi agent system for databases" submitted to IAT 99, Chen J.; Green S.; and Nealon J.

Conveniently, the agents support platform and agents make use of Java remote message indication (RMI), as described in the Java remote method indication specification revision 1.4, JDK 1.1 FSC, February 10 1997 from Sun Microsystems Inc. Java RMI produces a distributed object model with which method can be invoked on distributed objects (i.e. objects on different computers) to accomplish remote transactions.

Operating through the agent support programs 108, 308, 408, 508 are a number of agent programs shown schematically as 110, 310, 410, 510, although the number of such agent programs and their location will, as will become apparent below, vary from one time to another. Together, the agent programs make up what may be considered to be an "agent world" 80.

On the user terminal 10, a browser program 112, such as Internet Explorer 5 available from Microsoft ™ and Netscape Navigator 4 available from Netscape Corporation Inc. is provided. The browser program preferably includes a program for interpreting Virtual Reality Modelling Language (VRML) (as described at http://www.vrml.org) to allow the user to see a representation of a three dimensional or virtual world containing moving figures.

Also on the user terminal 10 are various other applications, such as a diary application (program which may, for example, be Microsoft Outlook ™).

Each of the server computers 30, 40, 50 also carries a hypertext transfer protocol server application 314, 414, 514 arranged to accept information through the TCP/IP stacks and pass it to the agent support platforms 308, 408, 508.

The computers also each include a Voice Over Internet Protocol stack 104, 304, 504, allowing a conversation using the microphone and loudspeaker 17, 18 on the user terminal 10 and a headset (not shown) associated with a human user connected to the computers 30, 50.

On the call centre server computer 30, a number of databases are provided; a database 322 containing profile data for each user, a database 324 maintaining a history of services provided to each user; and a database 326 providing knowledge about the domain of operation of the call centre (in this case, knowledge about flight and hotel bookings).

Also provided is a natural language program 307 arranged to receive a text string and to attempt to match the text string against a number of possible meanings corresponding to actions which can be provided by the call centre (for example products or services which can be ordered or information which may be requested). The natural language process 307 is also arranged to perform the reverse process; in order words, to generate text strings in natural language which correspond to a request for information from the system, or a delivery of information from the system. Some natural language processing systems are described in, for example WO 98/11523 or WO 99/31604 or WO 99/08202.

Finally, the call centre server 30 stores a control program 309 which provides overall control of the process, creates and terminates agents.

The control program operates in conjunction with the plan library 326, which provides essentially a series of scripts defining different transaction types. In response to the scripts and to the input from the user, the control program 309 selects a further script or follows the instructions in the existing script.

At the service provider computer 500, a database 518 containing details of the goods or services provided (e.g. in this case, a flight database containing details of flight routes, dates, prices and availability) 518 is provided. Also provided is a booking program 520 for accepting a reservation.

### General overview of operation of this embodiment

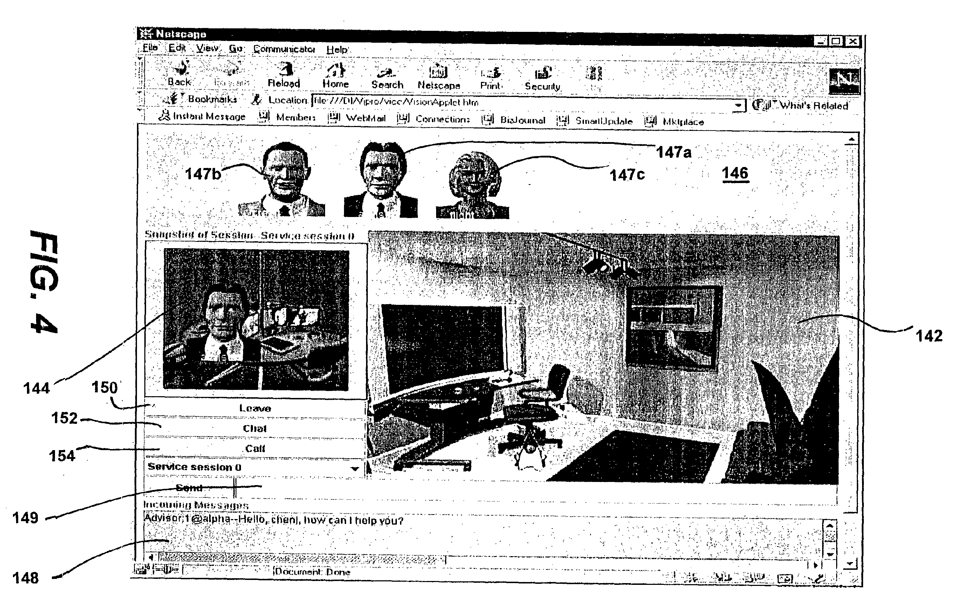

Initially, the user of a terminal 10 starts the browser program 112, and enters the uniform resource locator (URL) of the call centre server 30. The call centre server 30 then downloads an initial file, causing the display of Figure 4 on the display unit 14 by the browser program 112. The file comprises a Java applet (i.e. a program arranged to run on the computer terminal 10 through the browser program 112). The applet causes the display of two three dimensional virtual reality areas 142, 144. The first 142 represents the office of the user, and the second represents the call centre.

In an area 146, a number of images of different faces are shown (147a, 147b, 1467c). Such images are referred to as "avatars". In this embodiment they are shown as two dimensional images, but they could be three dimensional images, or even animated images with lip movements. Each represents an "agent" program capable of taking place in the call centre transaction. In this embodiment, the image 147a represents an adviser agent; the image 147b represents a credit card company agent; and the image 147c represents a flight provider company agent.

Each of the agent programs in this embodiment is a mobile agent; that is, a program which can cause its code and its current state to be transmitted, via the agent support programs, to a different computer and can resume execution there, whilst remaining in communication with other agent programs irrespective of their locality.

Also provided on the display of Figure 4 are Received and Sent text areas. In the Received text area 148, messages from the system are displayed to the user. In the Sent text area 149, the user can type in messages, for transmission to the system (e.g. on depression of the Return key).

Initially, a message such as that shown in Figure 4 is displayed in text area 148 and the user is invited to indicate what he wants. In return, the user types data in the Sent text area 149. The data will indicate that he wishes to go on a journey.

In response, the adviser agent collects sufficient information to define the journey. The adviser agent then summons one or more flight agents 147c from service provider computers 500 to join the session. Each agent present in the session is shown in the session area 144. The flight agent program 147c takes the information from the adviser agent program and supplies details of suitable flights (there may be no suitable flight or there may be one or more flight via different routes). The retrieved information is displayed on the terminal computer 10. The user confirms which, if any, of the routes are suitable. The adviser agent then initiates payment. A credit agent 147b joins the session and handles the credit card transaction.

Three further areas of the screen 150, 152, 154 provide buttons which can be selected by the user (for example by a mouse). A first 150 allows the user to abandon the call, at which point all agent programs terminate operation. A second 152 allows a user to request to be connected to other users who may have helpful information, in a "chat room" environment. Using the send and receive text areas 148, 149 the user is able to enter questions and other users to reply, using Internet relay chat (IRC) protocol or similar.

Finally, if the button 154 is selected, the systems sets up a voice-over-Internet call using Voice Over Internet Protocol, between the terminal computer 10 and a human operator connected via headset to the call service centre computer 30.

Thus, it will be seen that in general, the user is able to proceed with a query at their own speed. Although (unless specifically selected) the transaction does not involve a human being, the increased time available to the user, and the presence of avatars, can nonetheless provide the user with a satisfactory experience during the transaction as compared to conventional call centres.

The operation of the invention will now be described in greater detail.

In this embodiment, the agent programs communicate with each other using Knowledge Query and Manipulation Language (KQML), as described in "Secure agent - a secure architecture for the KQML agent communication language", see Thirunavukkiasu et al. CIKM 95 Intelligent information agent workshop, Baltimore December 1995, or "Evaluation of KQML as an agent communication language", Mayfield et al, http://www.csee.umbc.edu/agents/kqml, or Finnin et al in "Software Agents", J. Bradshaw(ed), MIT Press, Cambridge (US), 1997. This is a high level language intended for run-time exchange of knowledge between intelligent systems. KQML is both a message format and a message-handling protocol to support run-time knowledge sharing among agents. KQML can be used as a language for an application program to interact with an intelligent system or for two more intelligent systems to share knowledge in support of cooperative problem sharing.

The message consists of three logical layers; the content layer, the message layer and the communications layer. The content layer includes expressions encoded in any representational language including KQML, or knowledge information format (KIF) or ASCII. The communication layer provides features describing parameters such as the identity of the sending and recipient and the unique identity associated with the communication. The message layer describes the content language, and some description of the content, and supplies a speech act or performative (such as an assertion, a query, a command or any other of a set of known performatives). Accompanying the performative is a list of the relevant parameters. Thus, in a simple example, KQML can be used to query databases or request the evaluation of a string or an expression.

Thus, the agents in this embodiment are mobile agents, and are capable of communicating with each other using a high level language. It would be possible, however, to use other mobile agents such as Odyssey or Voyager where these were adapted to provide high level communication.

In this embodiment, the following programs are present:

Adviser agent - a program capable of moving between the call centre server computer and the users terminals 10. The adviser agent acts as an interface or "broker" between the human user of the terminal 10 and the service providers. The adviser agent accesses information about the customer, and knowledge about the flight booking operation, and then formulates queries or passing information to flight agent or other service provider agents; and bank or credit card agents or other supporting agents.

Flight agent - this program is capable of moving between the service provider computer 50 on which it is created, and the call centre computer 30. It is arranged to convert a high level query into a query specific to the structure of the database 518 of the service provider; to interrogate the database; and to convert the result back into a high level response. It is also capable of making a reservation on request and of returning a response confirming the reservation.

Bank or credit card agent - the functionality of these agents is similar to the service provider agents. They are arranged to move between the host computer 40 and the called centre server 30; to convert a high level credit query into an interrogation of their database and return a creditworthiness response; and to accept, process and confirm a debit instruction.

User profile database 322 - on first use by a user, the name, address, postcode, email, telephone number, and fax information (i.e. the contact details) of the user are stored within the entry for that customer in the user database. Further, the last twenty sessions of access data are maintained for each user, thus enabling a moving window of data reflecting the customers interests and preferences to be stored. For example, from this data it is possible to detect the customer's favourite airline, the customers preferred seating class (e.g. first, business or economy); any eating preferences such as vegetarian options; and any formally preferred destinations such as Europe or Asia.

The key processes taking place with in this embodiment are:
1. Registration (the customer registers with the call centre server)
2. Enquire about travel information (the customer requests information)
3. Arrange routes or book tickets
4. Network chat (customers can be connected to others who are likely to be able to answer their question)
5. Requesting flight tickets (the caller requests tickets or ticket reference from an airline)
6. Requesting train tickets (the caller requests tickets or ticket references from a train operator)
7. Book hotel (the call centres books hotels for the customer)
8. Bank payment processing
9. Credit check
10.Credit payment
11.Connect to human operator

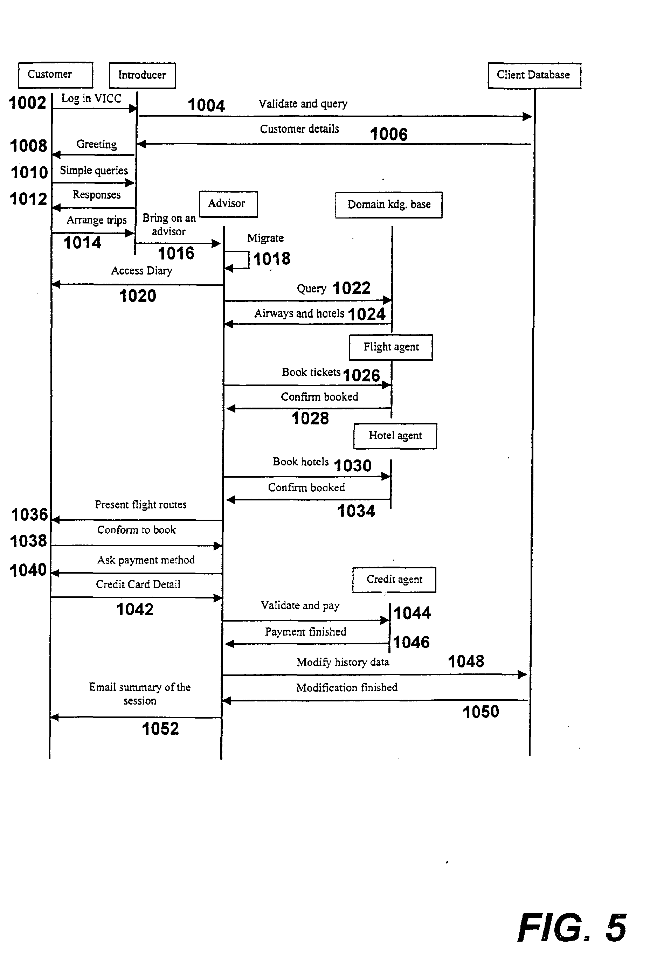

A straightforward scenario will now be described to illustrate the functioning of the embodiment in greater detail. Referring to Figure 5, in a step 1002, the user logs on to the call centre server; if the user has previously used the server, their details will be present in the customer database 322. Accordingly, in step 1004, the control program 309 passes the client identification data to the customer database 322 in step 1004 and receives customer details by return in step 1006. In step 1008, the customer is greeted by a message in the incoming message area 148, transmitted by the control program from the server computer 30.

In response, in step 1010, the user enters one or more queries in the Sent text area 149, to indicate what is required; for example, this trip is to be arranged. The queries are answered in responses 1012 in the incoming text area 148.

At each step, the control program makes use of the natural language program 307.

The text input by the user is supplied to the natural language program 307, which either understands what the user has requested, or generates a request for any missing information.

Once the natural language processing program 307 has located a type of service or other request (for example, where, as in step 1014, it detects that the user wants to arrange a trip) this result is passed to the control program 309 which creates a new adviser agent program in step 106 and an agent conference session (in other words, a data structure within which several agent programs can communicate with each other and share data).

The avatar 147a for the adviser agent is caused to move into the display area 144, to indicate the beginning of the conference.

In step 1018, the adviser program moves to the terminal computer 10, transmitting its program code and current state to the agent support program 108 which re-creates the adviser program executing in memory of the terminal computer 10.

In step 1020, the adviser program determines from the browser program 112, and/or operator system program 106, the diary program which is present on the user's terminal 10 (for example, Lotus Organiser; Lotus Notes; Microsoft Outlook or Microsoft Outlook Express) and reads each entry from the present data forwards a predetermined period (for example, three months). At the same time, the avatar of the adviser agent moves from the area 144 to the area 142, to give the user visual confirmation that the agent is now on his computer. The adviser program interacts with the natural language processing program 307 remotely, to parse each entry. Any which appear to be concerned with travel or accommodation are retained by the adviser agent program; others are ignored.

Using any additional data input by the user (for example, that the trip is to be in Europe, or the approximate date of the trip) and from the user database (for example, to identify common destinations of the user, preferred airline, preferred class of travel and so on), the adviser agent constructs a probable itinerary or itineraries, one for each travel plan within the diary. If some matter is unclear (for example whether hotel accommodation is to be booked, or where an itinerary ends), the adviser agent uses the natural language processor program 309 to construct appropriate queries to the user and completes the travel plan from the responses.

In step 1022, the adviser agent queries the domain knowledge database 324 to determine which service provider agent should be used, and the domain knowledge database lists suitable hotel and flight (and possibly other) agents for the geographical region concerned.

The control program 309 then causes the creation of one of each agent (for example a flight agent and a hotel agent) program on the host computer 30 50a, 50b ... The adviser agent transmits a query message containing the details of the itinerary in step 1026 to the or each flight agent program to provisionally book tickets. In step 1028 the flight agent returns confirmation of booking to the adviser agent.

In step 1030, the adviser agent sends a request to a hotel chain agent program or programs to book hotel reservations and in step 1034 receives confirmation of booking.

In step 1036, the adviser agent program presents the routes to the user for confirmation. In this embodiment, in addition to a textual listing of the itinerary, a map is geographically presented on the display unit 14, showing (for example in red) the flight plan overlaid over the area 142, with dates and destinations indicated next to each leg of the flight plan. At the same time, a message appears in the text box 147 asking the user to confirm that the flight plan is acceptable. In step 1038, the user confirms the booking.

In step 1040, the adviser program asks the user to select a payment method (again, reference may be made to the user database for details of previous payment methods selected by the user, so as to offer a preferred options). In step 1042, the user types in their credit card details (a form may be displayed on screen for this purpose if so required).

In step 1044, a credit agent program corresponding to the desired payment type is created by the control program 309 and a query supplying the credit card and amount details is submitted from the adviser agent to the credit agent. The credit agent then interrogates the database 418 on the server 40 and determines whether the transaction can be debited. If so, a confirmation message is returned in step 1046 to the adviser agent from the credit agent.

In step 1048, a new record is added to the client database and confirm that step 1050 to the adviser agent. Finally, in step 1052, the adviser agent sends an email summary of the session to the terminal 10 logging the transaction. The transaction being complete, the control program terminates the agents and returns to the initial screen of Figure 4. If there are no further transactions the user will terminate by closing the browser program 112.

The foregoing illustration serves to demonstrate several of the advantages of the present embodiment.

Firstly, the use of avatars gives customers an improved interaction. This is particularly so where the avatars are employed in conjunction with virtual offices, and move from one to other to demonstrate to the user which programs are present on his computer (and other parts of the system).

Secondly, the use of the graphical user interface enables a user to visualise information (such as complex travel plans) better than over a telephone line with a conventional call centre.

Thirdly, the use of natural language input reduces the number of menus through which a user might otherwise be required to navigate if employing the Internet, making the interaction more similar to interaction with a human operator than a voice response unit.

Fourthly, the use of a mobile adviser agent which can migrate to the user terminal 10 enables the user's diary to be interrogated for additional information, thus avoiding the need for the user to keyboard in full details of a complex flight plan (or other information which the user may hold locally). For certain types of information, the analysis of the information may be done wholly on the users terminal, thus reducing the amount of data which must be transmitted over the (potentially insecure) Internet link, and enhancing the customers confidentiality.

Fifthly, the use of mobile agents instead of conventional programs to interface to databases such as the flight and hotel database increases the ease with which a system can be deployed and new components subsequently added, since it enables new or changed programs (for example to reflect changes in the databases 418, 518) to be sent to the call centre server computer 30 from the server computers 40, 50 as necessary.

It is also possible for the flight, hotel or credit agents to migrate to their own server computers, to interrogate their respective databases locally; this has advantages of security since data is not carried over the Internet (except the query and response which are carried within the agent itself and may therefore be protected).

A modular (although not necessarily agent based) architecture is also desirable since it enables new suppliers to join the systems easily; on joining, each can be supplied with a generic supplier agent class or prototype, which contains the methods necessary for communication in KQML or other high level language, and for mobility, and the new supplier can add methods for interrogating its own database.

Thus, security is ensured since need not be given the right to migrate to any other server than their own and the call centre server, and will lack the necessary code to interrogate the databases of other service providers, or to perform any action other than high level communication within the call centre server itself. Thus, data from the user or other suppliers is inaccessible to supplier agents.

It should be understood that the above process description is not a rigid sequence of events followed in every transaction; rather, it merely illustrates the result of the choices followed by the user. In fact, the direction of events is controlled by the control program 309, which selects one of several possible situations in response to the information from the client (e.g. product sales or information supply), and creates the necessary instances of agent programs; and by the actions of the agent program in response to the data from the customer.

### Detailed Description Of Operation

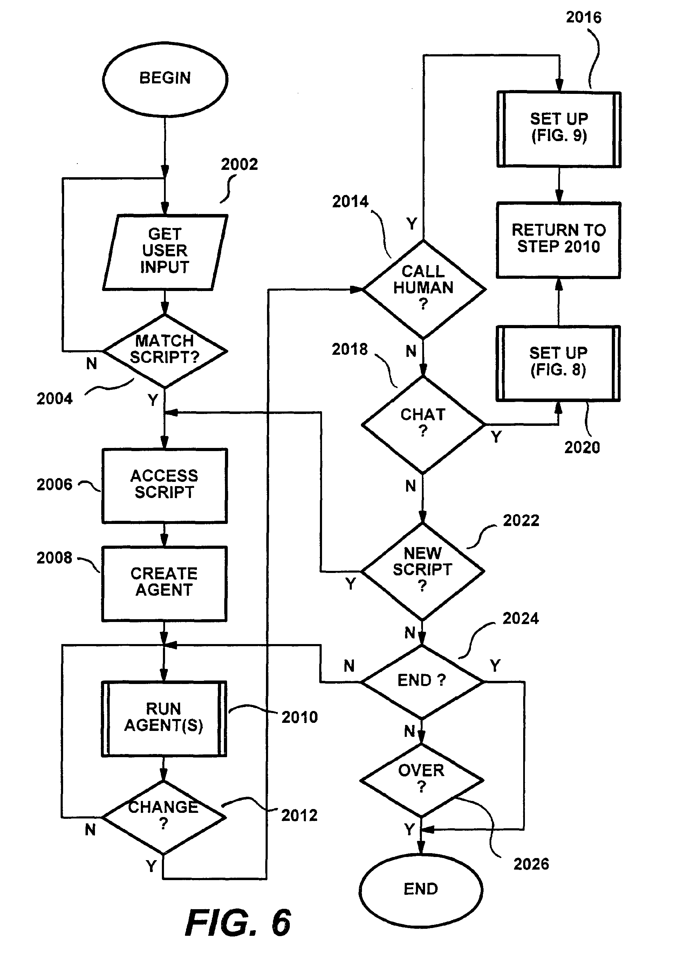

Referring to Figures 6-11, the operation of the embodiment will now be described in yet greater detail.

Figure 6 shows the overall operation of the control program. In step 2002, input from the user is received and sent to the natural language processing program for parsing. The results from the natural language processing program are compared with the scripts in the script library, to attempt to match one of the scripts (for example, by looking for words such as "book" and "flight").

If a script is matched (step 2004) then in step 2006, the script is accessed in the plan library and an agent session is started, and in step 2008, an adviser agent is created, and permitted to join the agent session (i.e. communicate with the natural language program, the control program and any other agent programs present).

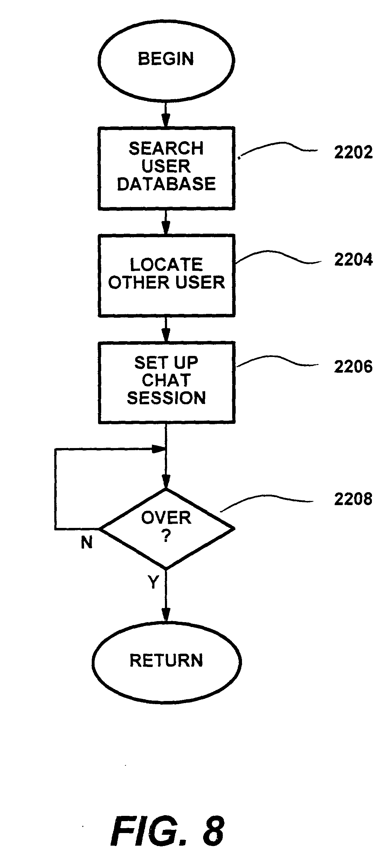

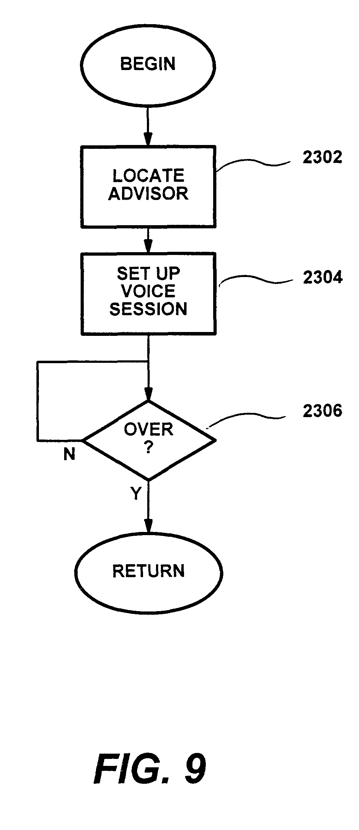

In step 2010, the agent program is caused to run. In step 2012, the control program detects whether a change in status occurred (for example, in response to an input from the user) and if so, in step 2014, the control program determines whether the user has selected a call to a human operator. If so, a voice over Internet call is set up as in Figure 9 and control then returns to step 2010. If not, then in step 2018 the control program determines whether the user has requested a chat session and, if so, sets up a chat session in step 2020 in accordance with Figure 8 and then returns to step 2010.

In step 2022, the control program determines whether the users actions should cause the execution of a new script, and if so, selects the new script and proceeds to step 2006 to add any necessary extra agents and run them. For example, the user may change their mind during one purchase, and key in text indicating a desire to purchase a different type or product or service.

In step 2024, the control program determines whether the user indicated a desire to end the session, and if so, does so, by ending all sessions, and sending a message to all agents to terminate their execution.

In a step 2026, the control program determines whether all operations requested by the user have been satisfied (for example, the requested products and services have been supplied) and, if so, likewise ends all sessions and determines all active agents.

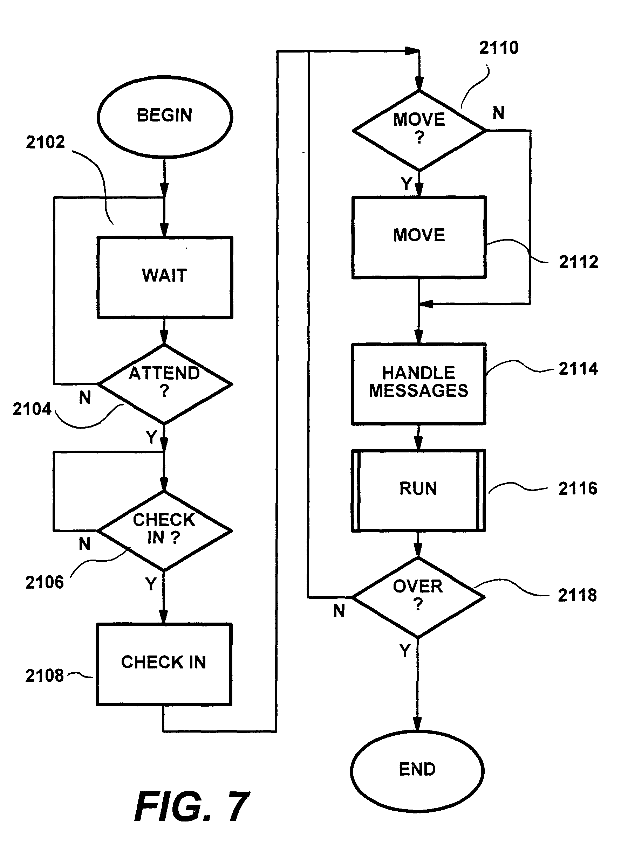

Referring to Figure 7, the overall operation of each of the agent programs is shown. After creation, in step 2102, the agent program waits for an instructions to join a conference (step 2104) and then to check into the conference (step 2106) which is executed in step 2108, all as described in the above referenced paper by Chen et al.

In step 2110, the agent program detects whether a move is instructed and, if so, moves in step 2112 to a different host and recommences execution.

In step 2114, the agent program sends any messages to the agents support platform, and pulls messages intended for it from an input queue.

In step 2116, the agent program runs codes specific to that type of program (which is therefore different for the adviser agent program, each of the supplier agent programs, and each of the payment agent programs).

In step 2118, the agent program tests whether its execution is to be terminated and, if not, returns to step 2110.

Referring to Figure 8, the process of perform a chat session will now be described in greater detail. As mentioned above, in step 2202, the control program searches the user history database and, in step 2204, locates any other users who have previously ordered the product or information in question and who are currently logged on. In step 2206, an Internet Relay Chat Session to the other users, until the session is over (e.g. by the original user leaving or by all other users leaving).

Referring to Figure 9, the process of setting up a voice session will now be described. A number of human operators are provided, each with a terminal similar to the terminal 10a of a user, connected to the call centre server 30. Each of the terminals is associated with a respective product, service or information supplier, or payment service, and thus each corresponds to one of the agent program (there may be a one to many or many to one correspondence). The correct adviser is determined by the control program in step 2302, by determining which agent program was last active and selecting the associated human adviser. The IP address of the terminal of the human adviser (stored in a list of the call centre server 30) is selected and a Voice Over Internet Protocol session is set up in step 2304 between the user terminal 10 and the adviser terminal. At the same time, the text previously appearing in the sent and received text boxes at the user termini is displayed on the adviser terminal, and any data retrieved from the user terminal is also displayed, to indicate to the human advisor what has occurred in the session so far.

The session continues until terminated by either party (step 2306).

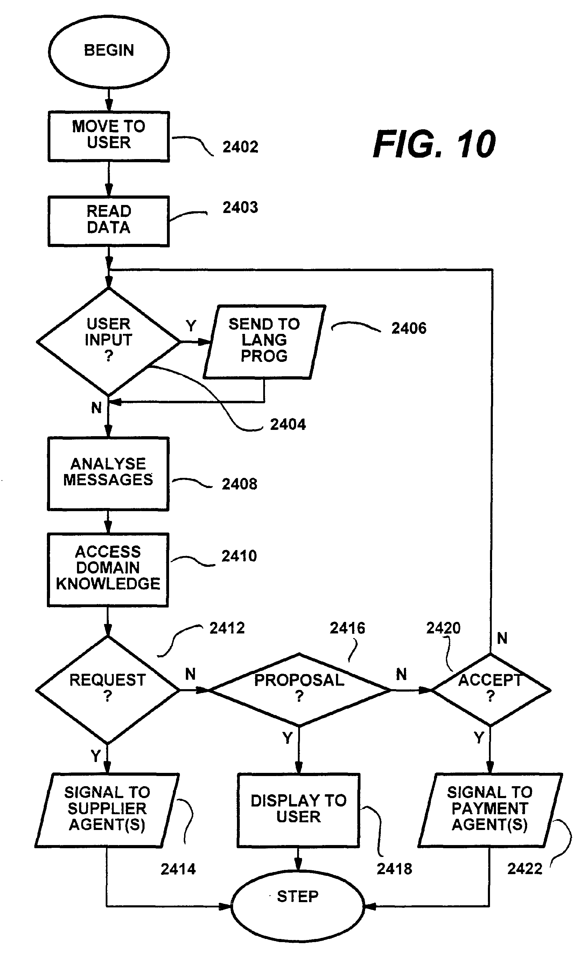

Referring to Figure 10, the code specific to the adviser agent program (discussed above in relation to step 2116 of Figure 7) will now be described.

In step 2402, the adviser agent moves to the user terminal 10.

In step 2403, the adviser agent examines the diary database program(s) present on the terminal 10, and interrogates each using an appropriate interface.

In step 2404, text received from the user (having been typed in the user terminal 10) is, if present, sent (step 2406) as a message to the natural language processing program.

In step 2408, received messages (from the control program, the natural language program, other agent program or other programs) are analysed, and (where relevant) associated with the queries to which they are responses. In step 2410, the domain knowledge database is accessed using any additional information from the analysed messages. If the domain knowledge indicates that the message, taken together with previous information, can be identified as a request for a particular product, service or information type, then in step 2414 the message is sent to the or each supplier agent concerned with the product, service or information type (for example, flight booking).

If the message is a product, service or information proposal from a supplier agent (step 2416), then the adviser agent displays the proposal (step 2418) on the user terminal 10.

If (step 2420) a message from the user indicating acceptance of a display proposal is detected, then in step 2422 the adviser agent sends a message to the or each relevant payment agent (for example representing different credit cards held by the user) to cause them to join the conference and commence action.

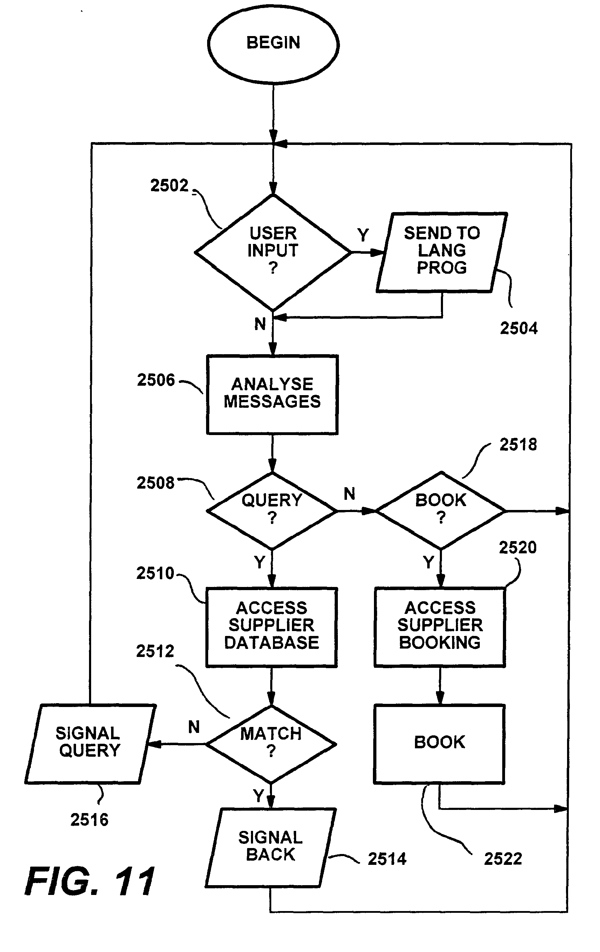

Referring to Figure 11, the corresponding process performed by a supplier agent program will be described.

Steps 2502-2506 correspond to steps 2404-2408 described above. If, in step 2508, the message contains a query then, in step 2510, the supplier agent remotely accesses the supplier database on the supplier server via the Internet. If a matching product or service (for example, a flight itinerary) is located (step 2512) the details are signalled back to the requesting program (typically, the adviser agent program) in step 2514.

If some information is missing which is needed to match against the records held in the database, then in step 2516, the supplier agent sends a query signal to the adviser agent, which will be used to generate a natural language question for display on the user terminal 10.

If no query was detected in step 2506, the supplier agent program determines (step 2518) whether the received messages contained an instruction to book the product or service and, if so, in step 2520, the booking program on the supplier server 40 is accessed and in step 2522 the supplier agent program makes a booking in the name of the user.

The operation of the payment agent program corresponds.

Whilst the application of the invention to booking flight tickets has been described, many other applications will be apparent. For instance, the invention is advantageous in product purchases where the user may not know exactly what to buy; in this case, the user's requirements are extracted by the adviser agent, and the databases of each possible supplier are interrogated by the respective supplier agent to offer alternatives to the user.

This is particular advantageous where, for example, the user is attempting to purchase computer hardware or software. In such a case, the user may not be aware of the technical details of the set up of computer terminal 10, and may therefore be unable to select the best accessory or program. In such a case, the adviser agent program is able to examine the Registry and the settings present in the operating system of the terminal 10, to determined hardware details such as processor speed, memory, hard disk drive space available and so on; and software settings such as operating system version; browser; plug-ins present, applications present (such as Microsoft Office™) and relevant versions; and so on. Thus, a user need only indicate that they wish to update their word processor, for example, for the adviser agent to be able to determine what the current settings are and select the appropriate supplier agent, and for the supplier agent to select the appropriate upgrade.

Finally, whilst the supply of goods and services as has been supplied above, the system is equally applicable to the supply of information per se, without payment; in such a case, the presence of the payment agent is of course unnecessary. In such a case, the supplier agents are arranged to interrogate respective databases or search engines for information other than product and service detail. Again, the ability of the adviser agent to determine data present on the users terminal 10 is of advantage in locating the relevant or required data, and the possibility of connecting the user to an appropriate chat session of previous users with knowledge in the same area is of equal benefit.

Many other modifications or substitutions will be apparent, and the present invention extends to any and all such variations. For example, some of the programs described above may not be implemented as agent programs, but as object oriented programs without movement capacity, or as conventional programs, where it is acceptable to forego the advantages described above in relation to the use of mobile agent programs.

The terminal and/or the call centre server may be equipped with speech recognition and text to speech conversion, to enable the user to interact using speech rather than typing and receiving text.

The server computers may not be located in the same jurisdiction as the terminal 10, or in the same jurisdiction as each other. For the avoidance of doubt, it should be understood that the present invention is intended to comprehend any use of the embodiments described herein, even if part of the apparatus is located outside the jurisdiction. For the avoidance of doubt, protection is hereby sought for any and all novel and inventive subject matter and combinations thereof.

## Claims

1. A method of operating a computer system to provide information, products or services comprising:
downloading a program from a server computer to a terminal computer;
executing the program on the terminal computer, the program being arranged to read data from the terminal computer and transmit results to the host computer; and
utilising the results in selecting the parameters of the information, product or service to supply.

2. The method of claim 1 in which the program is a mobile agent program.

3. The method of claim 1 in which the data is diary data read from a diary program.

4. A method of supplying information, products or services from a plurality of third parties to a user, via a server computer connected to the user, comprising
providing a mobile supplier agent program for each said supplier, the mobile agent programs being arranged to communicate with programs executing on respective host computers associated with the respective suppliers; and
providing one or more programs arranged to determine the nature of information, products or services required by the user, and to create one or more of said supplier agent programs in response to said determination.

5. A method of supplying information, products or services to a user via a terminal, comprising the steps of:
causing the display at the terminal of said user of a three dimensional display area;
providing an image of at least one human face;
generating natural language output to the terminal; and
receiving and parsing natural language input from the terminal.

6. A method of claim 5 in which each said image is associated with a corresponding program, and the number of said images is varied in response to the creation or termination of said program during a session.

7. A method according to claim 6, in which said program are mobile programs, capable of moving from one computer to another and resuming execution thereon, and in which said display is varied to move the position of said images in response to movement of said programs between computers.

8. A method of supplying information, products or services comprising:
providing a screen display of desired information; and
in response to a user command at a terminal computer, establishing a voice communications channel to a human adviser using Voice-Over-Internet Protocol via said terminal computer.

9. A method of supplying information, goods or services for a user via a terminal, comprising:
for each user, maintaining a database of previous supplies of said information, products or services;
providing information on the screen of said terminal;
in response to a command of a first user to whom a particular item of information, product or service is to be supplied, searching the records of other said users in said database to locate other said users who have previously been supplied with said information, product or service; and
establishing a communications channel between said first user and said other user or users.

10. A server computer operable in the method of any preceding claim.

11. A computer program arranged to operate on the server computer of claim 10 to configure said computer to operate according to any preceding claim.
